# DEMANDE DE BREVET EUROPEEN

(11) **EP 0 538 148 A1**
(43) Date de publication de la demande: **21.04.1993**
(21) Numéro de dépôt: 92402858.2
(22) Date de dépôt: 19.10.1992
(51) Int. Cl.: B65B 13/18

(54) **Dispositif pour la pose de pièces angulaires telles des cornières**

(30) Priorité: 18.10.1991 FR 9113049
(71) Demandeur: S.A.R.L. AS'ANGLE, F-82100 Castelsarrasin (FR); Simon, Bernard, F-82290 Meauzac (FR); Gautreau, Jean, F-09300 Fougax et Barineuf, Lavelanet (FR)
(72) Inventeur: Simon, Bernard, F-82290 Meauzac (FR); Gautreau, Jean, F-09300 Fougax et Barineuf-Lavelanet (FR)
(74) Mandataire: Ravina, Bernard

(57) **Abrégé**

Le dispositif permet de poser des pièces angulaires telles des cornières sur les arêtes verticales d'un volume à rigidifier et est associé à une machine à cercler permettant le maintien de ces cornières sur les arêtes verticales du volume.

Il comprend au moins un ensemble de pose (5) des cornières (1) constitué par un magasin (7) recevant les cornières (1) et par un manipulateur avec tête de préhension (10) pour la prise d'une cornière (1) dans le magasin et la pose de cette dernière sur l'arête du volume à rigidifier. Le magasin est monté mobile en translation sur la structure (6) de façon à amener la cornière à poser au contact de la tête de préhension (10). Le manipulateur est mobile en rotation autour de la colonne (8A). Après saisie de la cornière par la tête (10), le magasin d'abaisse puis recule. Le manipulateur peut pivoter de 45° de façon que sa tête vienne en regard de l'arête du volume. Ensuite, la structure de bras (12) portant la tête est déployée de façon que la cornière soit amenée sur l'arête verticale du volume.

## Description

La présente invention a pour objet un dispositif pour la pose de pièces angulaires de rigidification sur les arêtes d'un volume à transporter.

On sait que les volumes parallélépipédiques formés par empilement d'éléments semblables et accolement des piles formées sur des palettes de manutention doivent être rigidifiés pour éviter le glissement relatif des piles les unes par rapport aux autres.

Pour ce faire, il est connu de poser des pièces angulaires telles des cornières sur les arêtes verticales du volume et de poser plusieurs cerclages pour maintenir en pression les cornières contre le volume.

Il n'existe pas à ce jour de robot pour la pose des cornières si bien que cette opération est effectuée manuellement.

Cette manière de procéder entraine une perte de temps due essentiellement à l'impossibilité aux cornières de tenir seules, verticalement avant la pose des cerclages.

Le but de la présente invention est donc de mécaniser l'opération de pose des cornières en mettant en oeuvre un dispositif de pose de conception simple et peu coûteux et d'autoriser l'automatisation totale d'une ligne de conditionnement.

A cet effet, le dispositif selon l'invention pour la pose de pièces angulaires de rigidification 1 telles des cornières sur les arêtes verticales d'un volume parallélépipédique érigé par exemple sur une palette 3 de manutention et constitué par empilage d'éléments semblables et juxtaposition des piles formées se caractérisé essentiellement en ce que :
- il comprend une aire 4 de réception de la palette 3 et du volume 2 qu'elle porte, et au moins un ensemble 5 de pose des cornières 1 une à une, disposé de manière attenante à la dite aire 4,
- l'ensemble 5 de pose est constitué par une structure support 6 sur laquelle sont montés un magasin 7 de cornières 1 et un manipulateur 8,
- le magasin est agencé pour recevoir plusieurs cornières, lesquelles y occupent une position redressée et sont disposées les unes derrière les autres en emboitement mutuel, les dites cornières venant en appui par leur extrémité inférieure sur un socle constituant un fond horizontal 19 du magasin et la dernière cornière du lot de cornières prenant appui contre un dosseret 20 du magasin, le dit magasin étant par ailleurs doté d'au moins deux éléments de maintien latéral 21 du lot de cornières,
- le magasin est mobile en translation sur la structure support 6 et est déplacé sous l'action d'un organe moteur commandé 9, entre une première position de retrait selon laquelle il est écarté du manipulateur 8 et une seconde position de délivrance d'une cornière, selon laquelle le manipulateur opère la saisie d'une cornière dans le magasin 7,
- le manipulateur 8 est doté d'une tête de préhension 10 des cornières une à une et est angulairement mobile, autour d'une colonne 8A verticale, sous l'action d'un moyen moteur commandé 11, entre une position angulaire de préhension d'une cornière 1 dans le magasin 7 et une seconde position angulaire de pose de la cornière 1 sur une des arêtes verticales du volume parallélépipèdique 2,
- la tête de préhension 10 est fixée en extrémité d'une structure de bras 12 que comporte le manipulateur, cette structure de bras étant mobile en translation suivant un axe géométrique horizontal sous l'action d'un organe moteur 13, entre une position rétractée correspondant notamment à la préhension d'une cornière 1 dans le magasin et une position déployée correspondant à la pose d'une cornière 1 contre l'arête verticale du volume parallélépipèdique 2.

Selon une autre caractéristique de l'invention, le dispositif comprend quatre ensembles de pose 5 disposés par paire de part et d'autre de l'aire de réception 4 des palettes 3, les quatre ensembles de pose étant destinés respectivement à poser les cornières sur les quatre arêtes verticales du volume 2 à rigidifier.

Cette disposition permet la pose simultanée des quatre cornières d'angle.

Selon une autre caractéristique de l'invention, le dispositif est combiné à une machine de pose d'au moins un cerclage de maintien en pression des cornières contre les arêtes du volume 2.

Selon cette disposition, le dispositif de pose des cornières et la machine de pose des cerclages sont commandés à partir d'un même ensemble de commande programmable ou non, ce qui assure leur parfaite synchronisation.

D'autres avantages et caractéristiques de l'invention apparaitront à la lecture de la description d'une forme préférée de réalisation donnée à titre d'exemple indicatif en se référant aux dessins ci-joint en lesquels :
- la figure 1 est une vue de face d'un dispositif selon l'invention,
- la figure 2 est une vue de dessus montrant un dispositif selon l'invention équipé de quatre ensembles de pose pour la pose simultanée de quatre cornières d'angles,
- la figure 3 est une vue en coupe transversale du dispositif selon l'invention,
- la figure 4 est une vue en coupe selon la ligne A/A de la figure 1 montrant les organes de réglage de l'écartement entre les éléments de maintien latéral du lot de cornières dans le magasin,
- la figure 5 est une coupe longitudinale du manipulateur, effectuée suivant un plan horizontal,
- la figure 6 est une vue en coupe de dessus du manipulateur,
- la figure 7 est une vue en coupe longitudinale d'un préhenseur,
- la figure 8 est une section selon la ligne B/B de la figure 1.

Tel que représenté, le dispositif selon l'invention permet la pose de pièces angulaires de rigidification 1 telles des cornières, sur les arêtes verticales d'un volume parallélépipédique 2 érigé par exemple sur une palette 3 de manutention et constitué par empilage d'éléments semblables et juxtaposition des piles formées.

Ce dispositif est avantageusement associé à une machine à cercler à fonctionnement automatique.

Cette machine pose les cerclages après pose des cornières d'angles, ce qui maintien ces dernières en pression contre le volume parallélépipédique ce qui s'oppose au glissement relatif des piles les unes par rapport aux autres, d'où une rigidification du volume, ce qui autorise un transport en toute sécurité.

A titre d'exemple purement indicatif, les cornières sont constituées à base de carton rigide ou autre matière analogue et les éléments constituant le volume parallélépipédique 2 sont des cagettes ou autres emballages pour le transport des marchandises.

Le dispositif de pose comprend conformément à l'invention une aire 4 de réception de la palette 3 et de la charge qu'elle porte et au moins en ensemble 5 de pose des cornières 1 une à une disposé de manière attenante à la dite aire 4.

Selon une forme préférée de réalisation, l'aire de réception 4 est desservie par un chemin de roulement motorisé ou non sur lequel les palettes sont véhiculées.

Cette aire de réception pourra être associée à un chemin de roulement motorisé ou non sur lequel les palettes après renforcement du volume qu'elles portent sont évacuées.

Le chemin de roulement assurant la desserte de l'aire de réception et le chemin de roulement assurant l'évacuation de la palette sont les chemins d'une ligne de conditionnement.

Préférentiellement, l'aire de réception des palettes 3 comprend deux traverses 15 d'appui au sol, au moins deux chemins de roulement 16 parallèles, montés sur les traverses et destinés à recevoir et supporter la palette 3, deux moyens de guidage latéral 17 pour guider latéralement la palette lors de sa mise en place sur l'aire de réception 4, et un moyen d'arrêt 18 et d'immobilisation de la palette sur les chemins de roulement 16 destiné à coopérer en serrage avec l'un des éléments de la palette 3, le dit moyen d'arrêt étant activé en serrage par un moyen de détection 18A disposé au-dessus de l'aire de réception et apte à détecter la présence du volume parallélépipèdique, le dit moyen de détection étant situé suivant un niveau correspondant à environ la mi-hauteur du volume 2.

Les deux chemins de roulement 16 comprenent chacun une membrure de section droite en U entre les ailes de laquelle est montée une série de rouleaux rotatifs horizontaux.

Ces deux chemins de roulement pourront être motorisés afin d'assurer la continuité de la motorisation de la ligne de conditionnement.

Les chemins de roulement 16 s'étendent perpendiculairement aux traverses 15.

Les deux moyens de guidage latéral 17 s'étendent parallèlement aux chemins de roulement 16 à faible hauteur par rapport au sol. Chaque moyen de guidage 17 est constitué par une membrure en U portant une série de rouleaux verticaux librement rotatif.

Le moyen d'arrêt 18 et d'immobilisation de la palette 3 est constitué, par exemple, par deux vérins coaxiaux disposés de manière opposée l'un par rapport à l'autre et ce de part et d'autre du trajet de l'élément de la palette avec lequel ils doivent coopérer en serrage. Ces vérins seront solidarisés par leur corps à toute structure adaptée, fixe par rapport aux chemins de roulement 16. La tige de chaque vérin recevra en extrémité un patin destiné à coopérer en serrage avec la palette.

Le moyen de détection 18A pourra être, par exemple, constitué par une cellule photo-électrique apte à capter le rayon lumineux émis par un organe émetteur approprié. Le moyen de détection est positionné en sorte que le rayon lumineux soit coupé uniquement lorsque la palette est correctement positionnée sur l'aire de réception 4.

On vient de décrire une aire de réception équipée de deux chemins de roulement.

Selon une autre forme de réalisation, il est prévu un troisième chemin de roulement disposé fixement entre les deux autres, ce troisième chemin de roulement pouvant être motorisé pour l'entraînement de la palette.

Selon une autre disposition, il ne sera prévu qu'un seul chemin de roulement, ce dernier occupant toute la largeur de l'aire de réception 4.

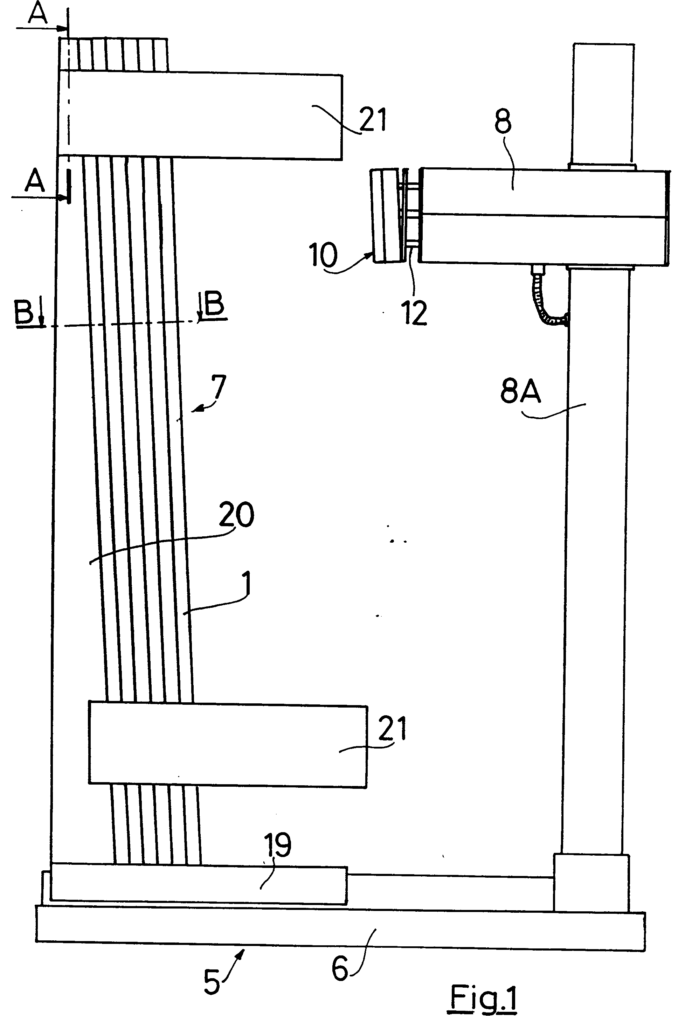

Comme on peut le voir plus particulièrement en figure 1, l'ensemble 5 de pose est constitué par une structure support 6 sur laquelle sont montés un magasin 7 de cornières 1 et un manipulateur 8.

La structure support 6 est, par exemple, constituée par un longeron tubulaire de section droite rectangulaire ou carrée.

Le magasin 7 est agencé pour recevoir plusieurs cornières lesquelles y occupent une position redressée et sont disposées les unes derrière les autres en emboîtement mutuel. Le magasin est pourvu d'un socle constituant fond horizontal 19, les cornières par leur extrémité inférieure venant en appui sur le dit fond. Ce magasin est également pourvu d'un dosseret 20 contre lequel prend appui la dernière cornière du lot de cornières qu'il reçoit. De plus, le magasin 7 est équipé d'au moins deux éléments de maintien latéral 21 du lot de cornières et préférentiellement d'un jeu supérieur de deux éléments 21 et d'un jeu inférieur de deux éléments 21.

Les éléments de maintien 21 en combinaison avec le fond et le dosseret déterminent un logement dans lequel est disposé le lot de cornières, ce logement en regard du manipulateur étant ouvert.

Préférentiellement, le dosseret du magasin est incliné vers l'arrière de façon que les cornières puissent être inclinées vers l'arrière et vers le dosseret, ce qui accroit leur stabilité. Leur stabilité se trouve encore accrue par le fait que les éléments de maintien latéral sont constitués chacun par une brosse laquelle vient par ses soies au contact des cornières pour s'opposer à leur mouvement de chavirement vers l'avant et vers l'ouverture du magasin 7.

Il y a lieu de noter que l'utilisation des brosses qui sont des organes compréssibles latéralement permet de plus d'absorber les différences dimensionnelles entre les cornières.

En outre, pour que les cornières puissent s'auto-positionner correctement dans le magasin, le dosseret présente en regard du lot de cornières, une forme convexe (20A) correspondant à la forme concave des cornières, la dernière cornière du lot venant par sa forme concave coopérer en engagement de forme avec la forme 20A du dosseret.

Préférentiellement, la largeur du magasin est ajustable de façon à pouvoir positionner des cornières de différentes largeurs. Ce réglage de largeur est opéré par réglage de l'écartement entre chaque élément de maintien latéral et le plan géométrique (P) médian vertical du magasin.

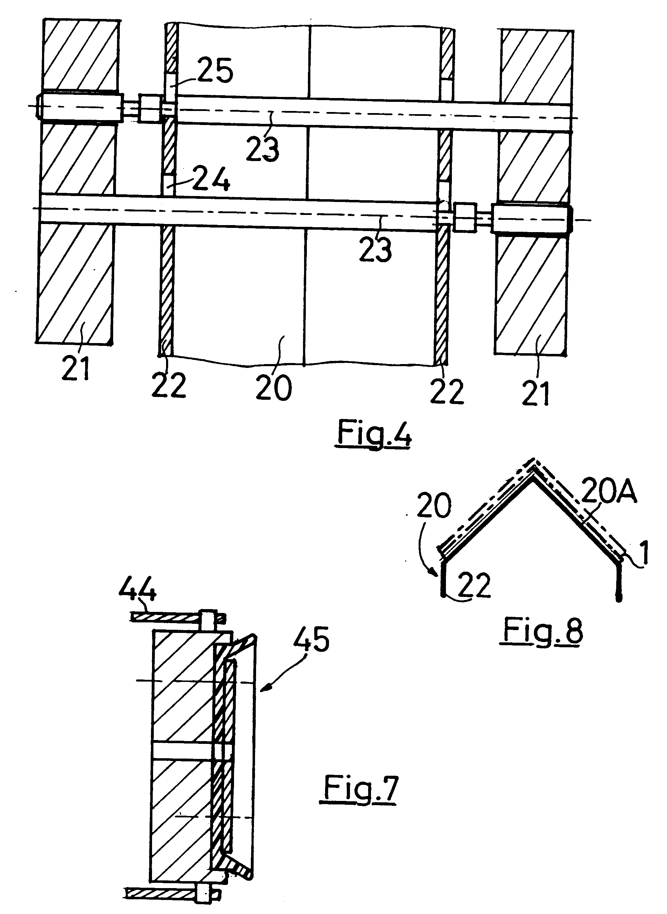

En se référant à la figure 4, on va décrire les moyens permettant de régler la largeur du magasin.

Le dosseret 20 en arrière de la forme convexe 20A présente deux ailes verticales 22 parallèles, écartées l'une de l'autre et dans le corps de chaque élément de maintien latéral 21 sont encastrées deux tiges cylindriques 23 horizontales engagées, chacune de manière amovible, dans deux orifices 24 et 25 pratiqués respectivement dans une aile et dans l'autre.

L'orifice 24 est de forme oblongue et préférentiellement est orienté verticalement. L'orifice 25 présente forme circulaire, prolongée vers le bas par un rétrécissement de forme oblongue de largeur moins importante que le diamètre de la forme circulaire.

Chaque tige 23 suivant une portion de sa longueur présente plusieurs gorges espacées les unes des autres correspondant à différentes largeurs du magasin.

Une de ces gorges, celle correspondant à la largeur désirée, est engagée dans le retrécissement de l'orifice 25.

De plus, chaque tige 23 de l'un des corps des éléments de maintien latéral 21 est engagée par ailleurs de manière libre en translation, dans un orifice pratiqué dans le corps de l'autre.

La largeur de chaque gorge correspond à l'épaisseur des ailes verticales 22 et le diamètre mesuré à fond de gorge correspond à la largeur du rétrécissement oblong.

Ainsi, chaque tige 23, lorsqu'une de ses gorges est engagée dans le rétrécissement, se trouve bloquée en translation ce qui maintien l'écartement entre les deux éléments de maintien latéral 21.

Chaque tige 23 comme on le comprend coopère avec les deux dispositifs 21 si bien que chacune de ces dernières se trouve maintenue, sous l'effet du poids des éléments 21, dans les orifices 24 et 25 respectifs.

Avec de tels moyens, le réglage de l'écartement est simple à effectuer puisqu'il suffit d'abord de repousser les éléments de guidage 21 vers le haut en sorte que la gorge de chaque tige soit libérée du rétrécissement correspondant.

Les tiges se trouvent alors libérées en translation ce qui permet le réglage de la largeur du magasin en écartant ou rapprochant l'un de l'autre, les éléments de maintien latéral 21.

Ensuite, les gorges correspondant au nouveau réglage seront introduites dans les rétrécissements.

Préférentiellement, le magasin est mobile en translation horizontale sur des éléments de guidage montés sur la structure support 6 et est déplacé sous l'action d'un organe moteur commandé 9 entre une première position de retrait selon laquelle il est écarté du manipulateur 8 et une seconde position de délivrance d'une cornière selon laquelle le manipulateur 8 opère la saisie d'une cornière dans le magasin 7.

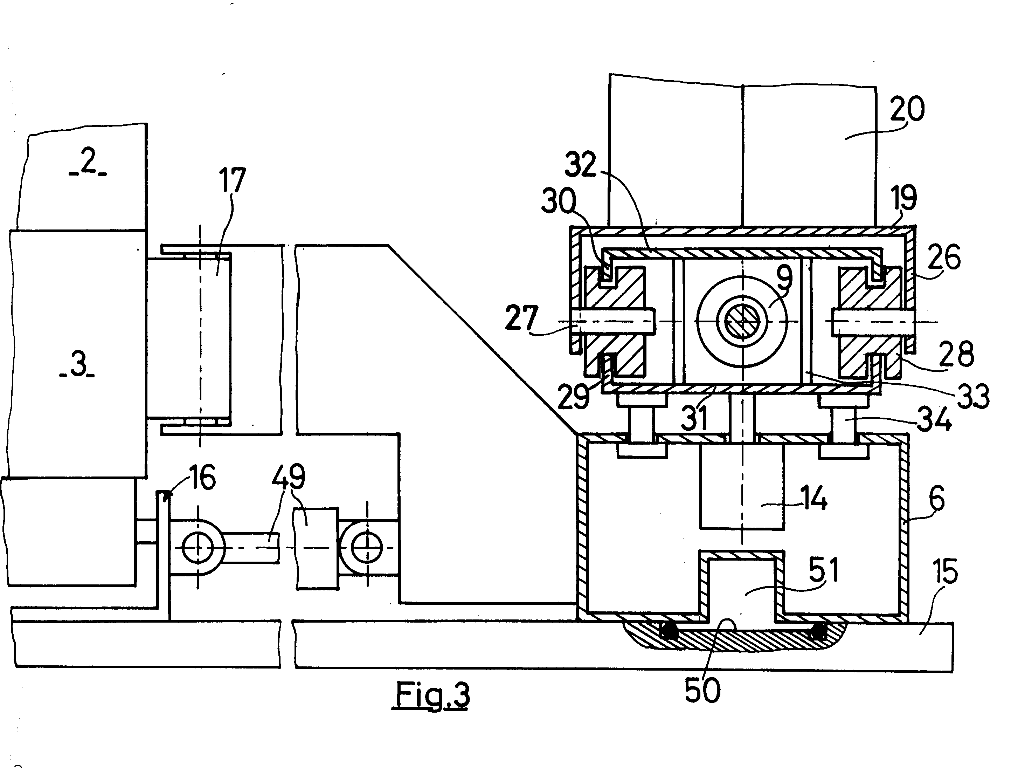

Les éléments de guidage en translation sont montrés en figure 3.
Sur cette figure, on peut voir que le socle 19 du magasin présente deux ailes verticales 26 en saillie vers le bas, parallèles à la direction de déplacement du magasin, et écartées l'une de l'autre. Chacune de ces deux ailes porte dans l'intervalle qui les sépare, deux axes horizontaux 27 sur chacun desquels est monté fou un galet 28 à gorge qui coopère en guidage d'une part, avec un rail inférieur 29 sur lequel il prend appui par le fond de sa gorge, et d'autre part avec un rail supérieur 30 pénétrant dans sa gorge, disposé parallèlement au rail 29 et écarté de ce dernier d'une valeur supérieure au diamètre du galet pris à fond de gorge. La paire de rails inférieurs et la paire de rails supérieurs sont respectivement portées par une semelle inférieure 31 horizontale et une semelle supérieure 32 horizontale écartée de la semelle 31 et réunie à cette dernière par un jeu d'entretoises verticales 33. Ces entretoises forment avec les semelles 31 et 32 une poutre dans laquelle est logée l'organe moteur 9 du magasin, cet organe moteur étant un vérin pneumatique articulé par son corps à une chape fixée à l'une des semelles et par sa tige à un élément 34 solidaire des deux ailes verticales 26 du socle du magasin 7.

Toujours selon la forme préférée de réalisation, le manipulateur 8 est doté d'une tête de préhension 10 des cornières une à une et est angulairement mobile autour d'une colonne tubulaire 8A verticale, sous l'effet de l'action d'un moyen moteur commandé 11 entre une position angulaire de préhension d'une cornière 1 dans le magasin 7 et une seconde position angulaire de pose de la cornière sur une des arêtes verticales du volume parallélépipédique.
La colonne verticale 8A est encastrée par sa portion inférieure dans la structure 6 et son axe longitudinal est contenu dans un plan géométrique vertical (P) médian au magasin 7.
La direction du mouvement de translation du magasin dans un sens ou dans l'autre s'effectue parallèlement au plan P.

Pour la saisie d'une cornière dans le magasin, le manipulateur 8 par pivotement autour de la colonne 8A est amené suivant sa première position et est tourné vers l'ouverture du magasin. Selon cette position, l'axe lontigudinal du manipulateur est contenu dans le plan géométrique (P). Ensuite, l'organe moteur 9 du magasin est activé en sorte de déplacer ce dernier vers le manipulateur.

On comprend que le magasin sera arrêté dans sa course lorsque la première cornière viendra en butée contre la tête 10 du manipulateur.
Afin d'éviter la détérioration de la cornière par écrasement, sous l'effet d'une poussée trop importante, un moyen de limitation de l'effort de poussée est associé à l'organe moteur 9.

Il y a lieu de noter que selon la position de délivrance, le magasin sous l'effet de la poussée exercée par la tête de préhension pivote vers l'arrière autour des galets arrière 25 les galets avant 25 venant en appui contre les rails supérieurs 30.

Après saisie de le cornière par la tête de préhension 10 le magasin est ramené vers sa position de retrait et il est nécessaire avant que ce mouvement soit amorcé que l'extrémité inférieure de la cornière soit écartée du socle du magasin et ne porte donc plus sur ce dernier.
Selon la forme préférée de réalisation, le magasin 7, ses éléments de guidage et son organe moteur 9 sont supportés par un moyen élévateur 14 monté sur la structure support 6 et commandé de façon que le dit magasin, ses éléments de guidage en translation et son organe moteur 9 soient élevés ou bien abaissés. La position d'élévation correspond à la course du magasin depuis sa position de retrait vers sa position de délivrance tandis que la position abaissée correspond à la course inverse.

Il y lieu de noter que l'abaissement du magasin est effectué avant que le mouvement du dit magasin vers sa position de retrait ne soit opéré. Il faut également noter que l'abaissement s'effectue après que la tête 10 ait saisi la cornière.

Cette disposition écarte tout risque d'entrainement de la cornière par le magasin lors de son mouvement vers sa position de retrait.

A titre d'exemple purement indicatif, le moyen élévateur 14 est constitué par au moins un vérin hydraulique logé verticalement en partie dans la structure support 6. Cette structure dans l'axe du vérin présente un orifice de passage de la tige du vérin, laquelle vient se fixer à la semelle inférieure 31. Le mouvement d'élévation du magasin ést limité par des moyens de butée 34.
Les moyens de butée 34 sont constitués chacun par une tige verticale fixée à la semelle 31 et pénétrant par sa portion inférieure dans la structure 6 par passage au travers d'un orifice pratiqué dans la dite structure.

La tige, dans la structure 6 comporte un épaulement d'un diamètre plus important que celui de l'orifice, le dit épaulement étant destiné à venir buter contre la bordure de l'orifice au cours du mouvement d'élévation pour limiter le dit mouvement.

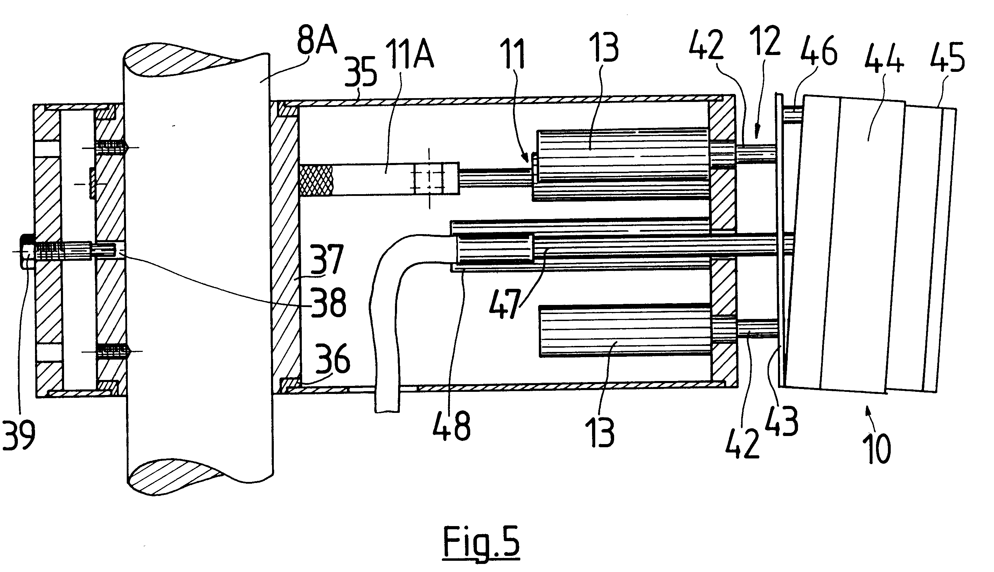

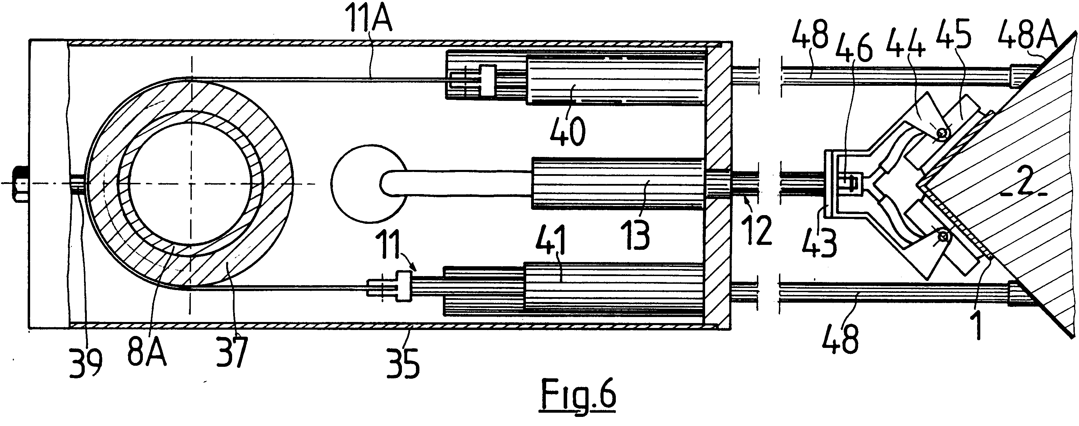

Le manipulateur 7 est représenté en figures 5 et 6. Le manipulateur, réglable en hauteur sur la colonne 8A comprend un corps creux 35 s'étendant horizontalement, percé suivant un même axe horizontal par deux orifices recevant chacun un coussinet 36. Les deux coussinets 36 sont engagés en rotation sur un même manchon 37 calé en rotation et en translation sur la colonne 8A. Ce manchon suivant un arc de circonférence de cercle, est pourvu d'un moyen de butée angulaire 38 coopérant tour à tour en butée avec une vis de butée 39 solidaire du corps afin de limiter le mouvement angulaire de pivotement du corps, le moyen moteur 11 étant monté en fixation dans le corps 35 du manipulateur et coopérant avec le manchon 37.

Le corps creux 35 est par exemple formé par jonction suivant un plan de joint horizontal, de deux demi-coquilles auxquelles sont fixées une paroi avant et une paroi arrière.

Le manchon 37 sera fixé sur la colonne 8A par deux vis pointeau par exemple. Ces vis sont accessibles de l'extérieur par passage au travers d'orifice pratiqué dans la paroi arrière du corps. Le moyen de butée 38 sera avantageusement constitué par une lumière oblongue pratiquée dans l'épaisseur du manchon 37.

L'arc de circonférence de cercle décrit par le manipulateur entre sa position de préhension d'une cornière et sa position de pose est au moins égal à 45°.

Le moyen moteur 11 est constitué par deux vérins 40 et 41 fixés par leur corps dans le corps creux 35 du manipulateur et par une sangle 11 souple enroulée partiellement autour du manchon 37 et fixée à ce dernier. La sangle par ses extrémités est fixée respectivement sur la tige du vérin 40 et sur la tige du vérin 41, les dits vérins étant activés dans le sens de la rétraction de leur tige, de manière non simultanée.

Préférentiellement, le piston du vérin 40 ou 41 non moteur sera freiné de manière réglable par tous moyens connus, ce qui permettra de régler la vitesse de rotation. Ces vérins seront de préférence pneumatiques.

Comme on peut le voir en figures 5 et 6, la tête de préhension 10 est fixée en extrémité d'une structure de bras 12 que comporte le manipulateur. Cette structure de bras est mobile en translation suivant un axe géométrique horizontal sous l'action d'un organe moteur 13, entre une position rétractée correspondant notamment à la préhension d'une cornière 1 dans la magasin 7 et une position déployée correspondant à la pose d'une cornière 1 contre l'arête verticale du volume parallélépipédique 2.

Préférentiellement, la structure du bras 12, est constituée par les tiges 42 de deux vérins horizontaux constituant l'organe moteur 13, montés l'un au-dessus de l'autre par leur corps, dans le corps 35 du manipulateur et par une platine 43 verticale à laquelle est solidarisée la tête de préhension 10.

Cette platine est fixée rigidement aux deux extrémités des tiges des vérins et est extérieure au corps du manipulateur.

Les vérins s'étendent suivant un plan contenant l'axe horizontal médian du corps 35 et sont parallèles à cet axe. Les tiges des vérins s'engagent chacune dans un orifice pratiqué dans la paroi avant du corps du manipulateur.

Ces vérins sont fixés au corps 35 par tous moyens connus de l'homme de l'art et sont activés simultanément.

La tête de préhension 10 comprend un corps 44 supportant au moins un organe préhenseur 45. La tête 10 par son corps, est montée de manière flottante en extrémité de la structure de bras 12 de façon à pouvoir s'auto-orienter d'une part, par rapport à la cornière à saisir dans le magasin et d'autre part, par rapport à l'arête du volume 2 sur laquelle elle doit être posée.

Il y a lieu de noter que le manipulateur est disposé en hauteur suivant environ le même niveau occupé par le moyen de détection.

Cette caractéristique en combinaison avec le montage flottant de la tête permet la pose des cornières sur des arêtes présentant des défauts de verticalité. De surcroît le montage flottant permet à la tête de préhension, sous l'effet de son propre poids de s'incliner vers le bas et de venir se positionner correctement par rapport à la cornière à saisir dans le magasin, cette cornière étant inclinée vers l'arrière.

Selon la forme préférée de réalisation, la platine 43 de la structure de bras 12 est pourvue de deux goujons 46 engagés chacun avec jeu relativement important dans un orifice du corps 44 de la tête ce qui permet de réaliser le montage flottant.

En figure 6 et 7 est représentée une tête de préhension.
La tête de préhension 10 comporte deux préhenseurs 45 disposés symétriquement par rapport à un plan géométrique vertical contenant l'axe géométrique de la structure de bras 12. Chaque organe préhenseur est une ventouse d'aspiration et est monté de manière articulée autour d'un axe vertical dans une chape formée dans le corps 44. La ventouse d'aspiration est connectée à une source d'aspiration par l'intermédiaire de conduits dont un 47 est porté par la structure de bras.

Le conduit 47 est rigide et est connecté dans le corps 35 à une conduite souple par exemple connectée à la source à dépression.

Selon une première forme de réalisation, les deux ventouses sont alimentées par un même circuit d'aspiration.

Selon une seconde forme de réalisation, chaque ventouse est alimentée par un circuit qui lui est propre. Les deux ventouses coopèrent respectivement avec les deux ailes des cornières et sont disposées de manière évasée.

On comprend que la saisie de chaque cornière est opérée par la face externe de chaque aile.

Chaque ventouse est portée par un bloc métallique ce bloc métallique étant articulé à la chape et l'axe géométrique d'articulation étant disposé au plus près du plan contenant la lèvre de la ventouse parallèlement au dit plan pour une meilleure préhension.

A titre d'exemple purement indicatif, une plaque vissée dans le bloc, maintien la ventouse contre ce dernier le fond de la ventouse étant enserré entre le bloc et la plaque.

Il est bien évident que le bloc et la plaque sont percés d'un orifice connecté aux conduits d'aspiration.

Selon la forme préférée de réalisation, chaque ventouse est associée à un organe élastique. Les deux organes élastiques associés aux deux ventouses ont pour but, avant prise d'une cornière, de maintenir ces dernières de telle sorte que l'angle qu'elles forment soit plus grand que l'angle formé par les ailes de la cornière.

Cette disposition, lors de la saisie de la cornière évite le retournement de la lèvre de la ventouse vers l'intérieur, ce qui est générateur de prise d'air et de rupture de dépression.

Selon la forme préférée de réalisation, le manipulateur 8 comporte des organes de centrage 48 de la tête 10 par rapport à l'arête du volume. Ces organes de centrage sont activés lorsque le manipulateur est disposé selon la position de pose de la cornière, les dits organes de centrage lorsqu'ils sont activés, venant en appui contre le volume 2 de part et d'autre de l'arête destinée à recevoir la cornière 1.

Ces organes de centrage 48 seront deux vérins disposés horizontalement respectivement de part et d'autre de la structure de bras.

Chaque vérin 48 est monté par son corps dans le manipulateur et est fixé à la face avant du corps 35. Cette face avant, dans l'axe du vérin 48, présente un orifice de passage de la tige de ce dernier, laquelle porte en extrémité un tampon d'appui 48A contre le volume 2. Ce tampon d'appui est constitué par une plaque plane disposée verticalement et formant un angle de 135° avec la tige du vérin. Par déploiement de leur tige, les tampons viennent en appui contre le volume 2 de part et d'autre de l'arête, ce qui a pour effet de positionner correctement le manipulateur par rapport au dièdre formé par les deux faces du volume sur lesquelles s'appuient les tampons 48A. Il y a lieu de noter que les tiges des vérins 48 sont déployées avant déploiement de la structure de bras 12, de façon que le centrage soit effectué avant pose de la cornière contre l'arête du volume. Selon cette forme de réalisation, l'arc de circonférence de cercle décrit par le man pulateur pourra présenter une valeur comprise entre 45° et 50°, la position finale du manipulateur n'ayant plus besoin d'être fixée avec précision.

Les différentes conduites des circuits pneumatiques associées aux différents vérins montés dans le corps 35 ainsi que la conduite d'aspiration connectée à la conduite rigide 47 pénètrent dans le corps 35 par passage au travers d'un orifice pratiqué dans la demi-coquille inférieure. Ces différentes conduites pénètrent par ailleurs dans la colonne 8A pour se connecter dans la structure 6A aux organes pneumatiques des différents circuits.

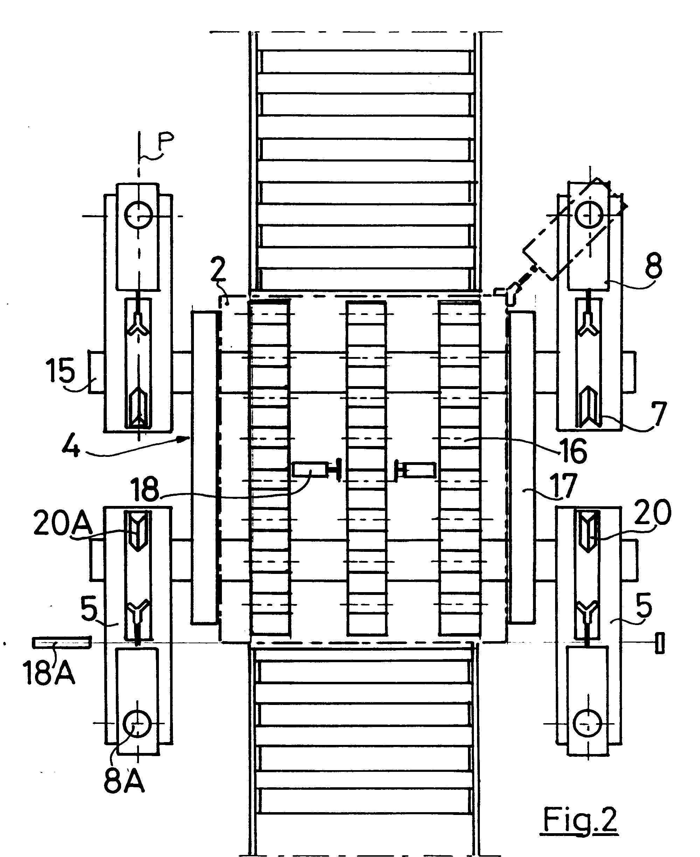

Avantageusement, comme on peut le voir en figure 2, le dispositif selon l'invention est équipé de quatre ensemble de pose 5 disposés par paire, de part et d'autre de l'aire de réception 4 des palettes 3, les quatre ensembles de pose étant destinés respectivement à poser les cornières sur les quatre arêtes verticales du volume 2 à rigidifier.

Selon cette configuration, chaque paire d'ensemble de pose 5 est posée sur une structure support 6 indépendante de la structure support 6 supportant l'autre paire d'ensembles de pose 5. De surcroit les deux moyens de guidage latéral 17 sont solidaires chacun de la structure support 6 contigue et l'écartement entre les deux moyens de guidage latéral 17 est ajustable par ajustement de l'écartement entre les deux structures support 6.

Les deux structures support 6 sont montées également sur les traverses 15 et sont connectées chacune au chemin de roulement le plus proche, par deux vérins 49 de réglage de leur écartement mutuel.

En outre, chaque partie de traverse 15 recouverte par les structures support est agencée en chambre 50, obturée de manière étanche par une semelle plane portée par la structure support 6 et comportant au droit de la chambre 50 un orifice 51 connecté à une source à dépression , ce qui permet après réglage de l'écartement et formation d'un vide d'air dans les chambres à dépression 50 de plaquer fermement la structure (6) sur les traverses 15.
En outre, l'écartement entre les deux ensembles 5 montés sur une même structure 6 pourra être réglable par tous moyens connus.

Préférentiellement, les deux colonnes 8A des ensembles d'une même paire sont réunies l'une à l'autre par une traverse supérieure.
Cette traverse présente une section droite en "U" et est positionnée en sorte que l'ouverture du "U" soit dirigée vers le bas.
De plus, cette traverse se développe latéralement par rapport aux deux magasins.
Chacun de ces deux magasins en extrémité supérieure, est équipé d'un bras horizontal portant un axe vertical sur lequel un galet est monté fou, ce galet étant engagé dans la traverse. Ainsi, les magasins se trouvent également guidés en extrémité supérieure.

Comme dit précédemment, le dispositif selon l'invention est équipé d'une machine de pose de cerclages.

A titre d'exemple, cette machine sera pourvue d'un anneau de cerclage, horizontal qui après mise en place des cornières contre les arêtes verticales viendra se placer autour de la partie supérieure du volume 2 pour opérer un premier cerclage.

Il y a lieu de noter que pendant l'opération de pose du premier cerclage, les cornières sont maintenues en pression contre leur arête respective par les manipulateurs (8) ces dernièrs étant disposés selon la position de pose.

Après pose du premier cerclage, la structure de bras de chaque manipulateur ainsi que les moyens de centrage 48 sont rétractés dans le corps et le manipulateur est ramené selon sa première position.

Ensuite, l'anneau de cerclage de la machine à cercler sera abaissé pour venir envrion à mi-hauteur du volume et ensuite en zone inférieure du volume.

Ensuite l'anneau de cerclage sera dégagé du volume 2 et la palette sera dégagée de l'aire de réception 4.

Un nouveau cycle de pose de cornières et de cerclage pourra à nouveau débuter dès qu'une palette sera disposée correctement sur l'aire de réception 4.

## Revendications

1. Dispositif pour la pose de pièces angulaires de rigidification (1) telle des cornières sur les arêtes verticales d'un volume parallélépipèdique (2) érigé par exemple sur une palette (3) de manutention et constitué par empilage d'éléments semblables et juxtaposition des piles formées caractérisé en ce que :
- il comprend une aire (4) de réception de la palette (3) et du volume (2) qu'elle porte, et au moins un ensemble (5) de pose des cornières (1) une à une, disposé de manière attenante à la dite aire (4),
- l'ensemble (5) de pose est constitué par une structure support (6) sur laquelle sont montés un magasin (7) de cornières (1) et un manipulateur (8),
- le magasin est agencé pour recevoir plusieurs cornières, lesquelles y occupent une position redressée et sont disposées les unes derrière les autres en emboitement mutuel, les dites cornières venant en appui par leur extrémité inférieure sur un socle constituant un fond horizontal (19) du magasin et la dernière cornière du lot de cornières prenant appui contre un dosseret (20) du magasin, le dit magasin étant par ailleurs doté d'au moins deux éléments de maintien latéral (21) du lot de cornières,
- le magasin est mobile en translation sur la structure support (6), et est déplacé sous l'action d'un organe moteur commandé (9), entre une première position de retrait selon laquelle il est écarté du manipulateur (8) et une seconde position de délivrance d'une cornière, selon laquelle le manipulateur opère la saisie d'une cornière dans le magasin 7,
- le manipulateur (8) est doté d'une tête de préhension (10) des cornières une à une et est angulairement mobile autour d'une colonne (8A) verticale, sous l'action d'un moyen moteur commandé (11), entre une position angulaire de préhension d'une cornière (1) dans le magasin (7) et une seconde position angulaire de pose de la cornière (1) sur une des arêtes verticales du volume parallélépipèdique (2),
- la tête de préhension (10) est fixée en extrémité d'une structure de bras (12) que comporte le manipulateur, cette structure de bras étant mobile en translation suivant un axe géométrique horizontal sous l'action d'un organe moteur (13), entre une position rétractée correspondant notamment à la préhension d'une cornière (1) dans le magasin et une position déployée correspondant à la pose d'une cornière (1) contre l'arête verticale du volume parallélépipèdique (2).

2. Dispositif pour la pose de pièces angulaires selon la revendication 1 caractérisé en ce que le magasin (7), ses éléments de guidage et son organe moteur (9) sont supportés par un moyen élévateur (14) monté sur la structure support (6) et commandé de façon que le dit magasin, ses éléments de guidage en translation et son organe moteur (9) soient élevés ou bien abaissés, la position d'élévation correspond à la course du magasin depuis sa position de retrait vers sa position de délivrance tandis que la position abaissée correspond à la course inverse, ce qui permet après saisie d'une cornière par le manipulateur d'écarter de l'extrémité inférieure de la cornière saisie, le fond du magasin.

3. Dispositif selon la revendication 1 caractérisé en ce que l'aire de réception (4) des palettes (3) comprend deux traverses (15) d'appui au sol, deux chemins de roulement (16) parallèles montés sur les traverses (15) et destinés à recevoir et supporter la palette (3), deux moyens de guidage latéral (17) pour guider latéralement la palette lors de sa mise en place sur l'aire de réception (4), et un moyen d'arrêt (18) et d'immobilisation de la palette sur les chemins de roulement (16) destiné à coopérer en serrage avec l'un des éléments de la palette (3), le dit moyen d'arrêt étant activé en serrage par un moyen de détection (18A) disposé au-dessus de l'aire de réception et apte à détecter la présence du volume parallélépipèdique, le dit moyen de détection étant situé suivant un niveau correspondant environ à la mi-hauteur du volume (2).

4. Dispositif selon la revendication 3 caractérisé en ce qu'il comprend quatre ensembles de pose (5) disposés par paire de part et d'autre de l'aire de réception (4) des palettes (3), les quatre ensembles de pose étant destinés respectivement à poser les cornières sur les quatre arêtes verticales du volume (2) à rigidifier.

5. Dispositif selon la revendication 1 caractérisé en ce que le dosseret (20) du magasin est incliné vers l'arrière de façon que les cornières soient également inclinées vers l'arrière et que les éléments de maintien latéral (21) sont des brosses en contact avec les cornières pour maintenir ces dernières en position inclinée vers l'arrière.

6. Dispositif selon la revendication 1 caractérisé en ce que le dosseret présente, en regard du lot de cornières, une forme convexe (20A) correspondant à la forme concave des cornières, la dernière cornière du lot venant par sa forme concave coopérer en engagement de forme avec la forme (20A) du dosseret.

7. Dispositif selon la revendication 1 caractérisé en ce que les éléments de maintien latéral (21) sont réglables en écartement du plan géométrique médian vertical (P) du magasin.

8. Dispositif selon la revendication 7 caractérisé en ce que le dosseret (20), en arrière de la forme convexe (20A), présente deux ailes verticales (22) parallèles, écartées l'une de l'autre et que dans le corps de chaque élément de maintien latéral (21) sont enfichées deux tiges cylindriques (23) horizontales, engagées chacune de manière amovible dans deux orifices (24) et (25) pratiqués respectivement dans une aile et dans l'autre, dont un présente un rétrécissement, chaque tige 23 comportant plusieurs gorges correspondant à différentes largeurs de magasin dont une, celle correspondant à la largeur choisie, est engagée dans le rétrécissement que présente l'un des orifices, chaque tige (23) de l'un des corps des éléments de maintien latéral étant engagée de manière libre en translation dans un orifice pratiqué dans le corps de l'autre.

9. Dispositif selon la revendication 1 caractérisé en ce que le socle (19) du magasin présente deux ailes verticales (26) en saillie vers le bas, parallèles à la direction de déplacement du magasin, écartées l'une de l'autre, chacune de ces deux ailes portant dans l'intervalle qui les sépare, deux axes horizontaux (27) sur chacun desquels est monté fou un galet (28) à gorge qui coopère en guidage d'une part, avec un rail inférieur (29) sur lequel il prend appui par le fond de sa gorge, et d'autre part, avec un rail supérieur (30) pénétrant dans sa gorge, disposé parallèlement au rail (29) et écarté de ce dernier d'une valeur supérieure au diamètre du galet pris à fond de gorge, la paire de rails inférieurs et la paire de rails supérieurs étant respectivement portées par une semelle inférieure (31) horizontale et une semelle supérieure (32) horizontale écartée de la semelle (31) et réunie à cette dernière par un jeu d'entretoises verticales (33), lesquelles forment avec les semelles (31) et (32) une poutre dans laquelle est logée l'organe moteur (9) du magasin, cet organe moteur étant un vérin pneumatique articulé par son corps à une chape fixée à l'une des semelles et par sa tige à un élément (34) solidaire des deux ailes verticales (26) du socle du magasin (7).

10. Dispositif selon la revendication 1 caractérisé en ce qu'à l'organe moteur (9) du magasin est associé un moyen de limitation de l'effort de poussée, ce qui permet d'écarter les risques d'écrasement des cornières contre la tête de préhension (10) du manipulateur (8).

11. Dispositif selon les revendications 2 et 9 prises ensemble caractérisé en ce que le moyen élévateur (14) est constitué par au moins un vérin pneumatique logé verticalement en partie dans la structure support (6), ladite structure, dans l'axe du vérin, présentant un orifice de passage de la tige du vérin, laquelle vient se fixer à la semelle inférieure (31), le mouvement d'élévation du magasin étant limité par des moyens de butée (34).

12. Dispositif selon la revendication 1 caractérisé en ce que le manipulateur comprend un corps creux (35) s'étendant horizontalement, percé suivant un même axe horizontal par deux orifices recevant chacun un coussinet (36), les deux coussinets (36) étant engagés à rotation sur un même manchon (37) calé en rotation et en translation sur la colonne (8A), ledit manchon suivant un arc de circonférence de cercle étant pourvu d'un moyen de butée angulaire (38) coopérant tour à tour en butée avec une vis de butée (39) solidaire du corps afin de limiter le mouvement angulaire de pivotement du corps, le moyen moteur (11) étant monté en fixation dans le corps (35) du manipulateur et coopérant avec le manchon (37).

13. Dispositif selon la revendication 12 caractérisé en ce que le moyen moteur (11) est constitué par deux vérins (40) et (41) fixés par leur corps dans le corps creux (35) du manipulateur et par une sangle (11A) enroulée partiellement autour du manchon (37) et fixée à ce dernier, la dite sangle, par ses extrémités, étant fixée respectivement sur la tige du vérin (40) et sur la tige du vérin (41), les dits vérins étant activés dans le sens de la rétraction de leur tige de manière non simultanée.

14. Dispositif selon la revendication 1 caractérisé en ce que la structure de bras (12) portant la tête de préhension (10) est constituée par les tiges (42) de deux vérins horizontaux constituant l'organe moteur (13) montés par leur corps dans le corps (35) du manipulateur et activés simultanément, et par une platine verticale (43) à laquelle est solidarisée la tête de préhension (10), ladite platine étant fixée rigidement en extrémité des tiges des vérins.

15. Dispositif selon la revendication 1 caractérisé en ce que la tête de préhension (10) comprend un corps (44) supportant au moins un organe préhenseur (45), ladite tête (10) par son corps étant montée de manière flottante en extrémité de la structure de bras (12) de façon à pouvoir s'auto-orienter d'une part, par rapport à la cornière à saisir dans le magasin et d'autre part, par rapport à l'arête du volume (2) sur laquelle elle doit être posée.

16. Dispositif selon les revendications 14 et 15 caractérisé en ce que la platine (43) de la structure de bras (12) est pourvue de deux goujons (46) engagés chacun, vec jeu relativement important, dans un orifice du corps (44) de la tête.

17. Dispositif selon la revendication 15 caractérisé en ce que la tête de préhension (10) comporte deux préhenseurs (45), disposés symétriquement par rapport à un plan géométrique vertical contenant l'axe géométrique de la structure de bras (12), chaque organe préhenseur étant une ventouse d'aspiration et étant monté de manière articulée autour d'un axe vertical dans une chape formée dans le corps (44), la ventouse d'aspiration étant connectée à une source d'aspiration par l'intermédiaire de conduits dont un (47) est porté par la structure de bras, les deux ventouses coopérant respectivement avec les deux ailes des cornières et étant disposées de manière évasée.

18. Dispositif selon la revendication 15 caractérisé en ce que chaque ventouse est portée par un bloc métallique, ce bloc métallique étant articulé à la chape et l'axe géométrique d'articulation étant disposé au plus près du plan contenant la lèvre de la ventouse et parallèlement au dit plan.

19. Dispositif selon la revendication 1 caractérisé par des organes de centrage (48) de la tête (10) par rapport à l'arête du volume, les dits organes de centrage étant activés lorsque le manipulateur est disposé selon la position de pose de la cornière, les dits organes de centrage lorsqu'ils sont activés, venant en appui contre le volume (2) de part et d'autre de l'arête destinée à recevoir la cornière (1).

20. Dispositif selon la revendication 4 caractérisé en ce que chaque paire d'ensembles de pose (5) est posée sur une structure support (6) indépendante de la structure support (6) supportant l'autre paire d'ensembles de pose (5).

21. Dispositif selon la revendication 20 caractérisé en ce que les deux moyens de guidage latéral (17) sont solidaires chacun de la structure support (6) contigue et l'écartement entre les deux moyens de guidage latéral (17) est ajustable par ajustement de l'écartement entre les deux structures support (6).

22. Dispositif selon la revendication 21 caractérisé en ce que les deux structures support (6) sont montées sur les traverses (15), qu'elles sont chacune connectées au chemin de roulement le plus proche par deux vérins (49) de réglage de leur écartement, que chaque partie de traverse (15) recouverte par les structures support est agencée en chambre (50) obturée de manière étanche par une semelle plane portée par la structure support (6) et comportant au droit de la chambre (50) un orifice connecté à une source à dépression, ce qui permet après réglage de l'écartement et formation du vide d'air dans les chambres à dépression (50), de plaquer fermement les structures (6) sur les traverses (15).

23. Dispositif selon l'une quelconque des revendications précédentes caractérisé en ce qu'il est combiné à une machine de pose d'au moins un cerclage de maintien en pression des cornières entre les arêtes du volume (2).
